# EUROPÄISCHE PATENTSCHRIFT

(11) **EP 0 940 208 B1**
(45) Veröffentlichungstag und Bekanntmachung des Hinweises auf die Patenterteilung: **09.04.2003**
(21) Anmeldenummer: 99103618.7
(22) Anmeldetag: 25.02.1999
(51) Int. Cl.: B23D 25/06

(54) **Pendelschere**
Oscillating flying shears
Cisaille pendulaire

(30) Priorität: 05.03.1998 DE 19809445
(43) Veröffentlichungstag der Anmeldung: 08.09.1999
(73) Patentinhaber: SMS Demag AG, 40237 Düsseldorf (DE)
(72) Erfinder: Heitze, Gerhard, 57250 Netphen (DE); Baur, Thomas, Dipl.-Ing., 57271 Hilchenbach (DE); Grafe, Horst, 57271 Hilchenbach (DE)
(74) Vertreter: Valentin, Ekkehard, Dipl.-Ing.

(56) Entgegenhaltungen:
- DE-B- 1 103 724
- PATENT ABSTRACTS OF JAPAN vol. 014, no. 177 (M-0960), 9. April 1990 & JP 02 030418 A (NIPPON STEEL CORP.), 31. Januar 1990

## Beschreibung

Die Erfindung betrifft eine Pendelschere zum Durchschneiden von in Bewegung befindlichen, insbesondere hochtemperierten Halbzeugsträngen, mit einer in einem Rahmen drehbar gelagerten, doppelt gekröpften Kurbelwelle, die einen Obermesserschlitten mit zugehörigem Obermesser und eine Messertraverse mit zugehörigem Untermesser antreibt. Der Obermesserschlitten ist mit der Kurbelwelle durch zwei Pleuelstangen, die Messertraverse durch zwei Pendel verbunden. Eine derartige Pendelschere ist beispielsweise aus der DE-PS 1103724 bekannt.

Die JP 02 030 418 zeigt kühlbare Messerfutter mit Bohrungen zur Führung von kühlflüssigkeit.

Der Obermesserschlitten und die Messertraverse sind im allgemeinen als hohl gegossene Bauteile aus warmfestem Spezialguss hergestellt, der mit Beschaffungs- und Qualitätsproblemen belastet ist. Zum Beispiel besteht die Gefahr, dass als Kühlräume gedachte Hohlräume durch Kernversatz oder gar Kernverlust beeinträchtigt werden oder gar nicht vorhanden sind. Die daraus folgende unzureichende Kühlung führt wegen der bei über 700 °C Liegenden Oberflächentemperatur im Bereich der Schermesser zu Brandrissen, die aufwendige Austausch- oder Schweißaktionen erforderlich machen.

Weitere Schwachpunkte der bekannten Pendelschere sind deren schlittenseitige Pleuellager. Diese weisen einen angeschweißten oder integrierten Druckbolzen zur Übertragung der Schnittkräfte auf. Der Druckbolzen wird durch Stoßen bearbeitet. Dies ist ein kompliziertes, aufwendiges Bearbeitungsverfahren, dass zu keiner guten Oberfläche führt. Außerdem erfordert ein schadhafter Druckbolzen den Austausch des gesamten Pleuels.

Der Erfindung liegt die Aufgabe zugrunde, eine Pendelschere zum Durchschneiden von in Bewegung befindlichen, vorzugsweise hochtemperierten Halbzeugsträngen zu schaffen, die hohe Zuverlässigkeit und Standzeit erreicht.

Die Aufgabe wird dadurch gelöst, dass zwischen Obermesserschlitten und Obermesser ein Obermesserfutter sowie zwischen Messertraverse und Untermesser ein Untermesserfutter angeordnet sind und, dass der Obermesserschlitten und die Messertraverse sowie die zugehörigen Messerfutter als massive Bauteile mit Bohrungskühlung ausgebildet sind.

Die Aufteilung des Obermesserschlittens und der Messertraverse in einen Biegekräfte aufnehmenden und einen die stark wärmebeanspruchten Messer aufnehmenden Teil gestattet die funktionsgerechte Gestaltung dieser Bauteile. Die große Bauhöhe von Obermesserschlitten und Messertraverse dient der verformungsarmen Aufnahme der Biegekräfte, die eine Folge der punktuellen Einleitung der Antriebskräfte durch die Pleuel bzw. die Pendel sind. Die Messerfutter stützen sich auf ganzer Länge auf den Obermesserschlitten und die Messertraverse ab und übertragen so die Druckkräfte der Schnittmesser. Da die Messerfutter im wesentlichen auf Druck beansprucht werden, kann ihre Bauhöhe verhältnismäßig gering sein. Sie neigen deshalb trotz hoher und einseitiger thermischer Belastung weniger zum Verziehen.

Da der Obermesserschlitten, die Messertraverse und die Messerfutter als massive Bauteile ausgebildet sind, die eine Bohrungskühlung aufweisen, ist durch die fehlenden Hohlräume in Verbindung mit einer gezielten Zwangskühlung ein Maximum an Steifheit und Formhaltigkeit gewährleistet. Außerdem fallen die durch Gusskernversatz oder Gusskernverlust bedingten Unsicherheiten fort. Die intensive Kühlung aller Bauteile gestattet die Verwendung von normalem Stahlguss für den Obermesserschlitten und die Messertraverse. Lediglich die Messerfutter werden aus hitzebeständigem Spezialguss gefertigt, was aber bei der einfachen Form und der relativ geringen Größe derselben problemlos ist.

Dadurch, dass zwischen dem Obermesserschlitten und dem Obermesserfutter sowie zwischen der Messertraverse und dem Untermesserfutter eine wärmeisolierende Zwischenschicht angeordnet ist, wird der Wärmefluss zwischen den Messerfuttern und dem Obermesserschlitten bzw. der Messertraverse verringert und dadurch deren Temperatur bei vorgegebenem Kühlaufwand abgesenkt.

Von Vorteil ist, dass der Obermesserschlitten mit dem Obermesserfutter und die Messertraverse mit dem Untermesserfutter sowie zumindest das Obermesser mit dem Obermesserfutter durch eine elastische Schraubenverbindung verbunden sind. Wenn sich die Messerfutter durch deren unsymmetrischen Querschnitt und durch die ungleiche Aufheizung verziehen sollten, ist eine Spaltbildung zwischen dem Obermesserschlitten bzw. der Messertraverse und dem Messerfutter möglich. Dies würde bei konventioneller Verschraubung einen Bruch der Zuganker bewirken, mit denen die Messerfutter angeschraubt sind. Durch deren elastische Ausbildung werden die Verformungswege der Messerfutter problemlos überbrückt, ohne dass es zu einer Überbeanspruchung der Zuganker kommt.

In gleicher Weise dient auch die elastische Schraubverbindung zwischen dem Obermesser und dem Obermesserfutter der Begrenzung verformungsbedingter Spannungen.

Eine vorteilhafte Ausbildung der Erfindung besteht darin, dass die Schraubverbindung zwischen Obermesserschlitten und Obermesserfutter sowie zwischen Messertraverse und Untermesserfutter Zuganker aufweist, die durch Öffnungen im Obermesserschlitten bzw. in der Messertraverse hindurchragen und die in die Messerfutter einschraubbar sind, und dass die Zugankermuttern über je eine Unterlegscheibe sowie über je eine koaxiale Druckhülse mit den Messerfuttern und über je ein koaxiales Federelement mit der messerfernen Seite des Obermesserschlittens bzw. der Messertraverse in Druckkontakt stehen. Die koaxialen Druckhülsen wirken als Federwegbegrenzung für die Federelemente. Deren Steifigkeit ist so ausgelegt, dass die Federkraft der gewünschten Anpresskraft zwischen Messerfuttern und Obermesserschlitten bzw. Messertraverse entspricht.

Dadurch, dass die Federelemente zumindest eine Tellerfeder aufweisen, ist es möglich, auf kleinem Raum eine hohe Federkraft zu erzielen. Außerdem kann die Federsteifigkeit durch die Zahl der Tellerfedern eingestellt werden.

Da die Schraubverbindung zwischen Obermesser und Obermesserfutter einen Obermesserzuganker aufweist, der das Obermesserfutter überragt und mit diesem über eine zur Horizontalen geneigte, koaxiale Druckbüchse in Druckkontakt steht, besitzt der Obermesserzuganker eine relativ große Dehnlänge, die durch die Stauchlänge der Druckbüchse ergänzt wird. Zusammen ergibt sich dadurch ein elastischer Schraubverband, der die verzugsbedingten Spannungen des Obermesserzugankers in erträglichen Grenzen hält.

Es hat sich als Vorteil gezeigt, dass im messerseitigen Bereich des Obermesserschlittens und der Messertraverse sowie der Messerfutter Längsbohrungen vorgesehen sind, die parallel zu den Messern angeordnet und durch Querbohrungen verbunden sind. Durch die Längs- und Querbohrungen entsteht ein engmaschiges Kühlbohrungsnetz, in dem die Kühlflüssigkeit mit hoher Geschwindigkeit strömt und das aufgrund des hohen Wärmeübergangs und der exakten Größe und Lage der Bohrungen zu einer sehr effizienten Kühlung führt. Dies geschieht gezielt in der Nähe der thermisch besonders belasteten Bereiche der Messerfutter. Aber auch der Obermesserschlitten wird gezielt gekühlt. Dadurch ist auch die Schmierung der schlittenseitigen Pleuellager sichergestellt.

Dadurch, dass in den Querbohrungen Leitelemente zur Strömungsführung des Kühlmittels vorgesehen sind, wird eine exakte Führung der Kühlflüssigkeit und damit eine wirksame Kühlung erreicht.

Von Vorteil ist, dass die Leitelemente als einschraubbare Zylinder vom Durchmesser der Querbohrungen ausgebildet sind, die im Bereich der Längsbohrungen koaxiale Einschnürungen aufweisen. Da es sich um einfache Drehteile handelt, die zugleich als Stopfen zum Verschließen der Querbohrungen dienen, liegt hier eine einfache und kostengünstige Lösung der Strömungsführung vor.

Eine vorteilhafte Ausbildung der Erfindung besteht ferner darin, dass die Pleuelstangen ein schlittenseitiges Pleuellager mit einer anschraubbaren Lagerkugel aufweisen, die mit einer geteilten Kugelpfanne des Obermesserschlittens zusammenwirkt. Die Lagerkugel und die Kugelpfanne sind als Drehteile leicht und mit optimaler Oberfläche herstellbar. Sie gestatten eine zwangsfreie Bewegung des Obermesserschlittens in den Führungen der Pendel. Im Verschleißfall sind sie leicht auswechselbar.

Weitere Merkmale der Erfindung ergeben sich aus der folgenden Beschreibung und der Zeichnung, in der Ausführungsbeispiele der Erfindung schematisch dargestellt sind.

Es zeigen:
- Fig. 1: eine Pendelschere in teilweise längs geschnittener Vorderansicht,
- Fig. 2: eine Pendelschere in teilweise quer geschnittener Seitenansicht,
- Fig. 3: eine Seitenansicht des Obermesserschlittens,
- Fig. 4: einen Querschnitt C-C durch den Obermesserschlitten,
- Fig. 5: einen Längsschnitt A-A durch das Obermesserfutter,
- Fig. 6: einen Längsschnitt B-B durch das Obermesserfutter,
- Fig. 7: eine Ansicht eines Leitelementes.

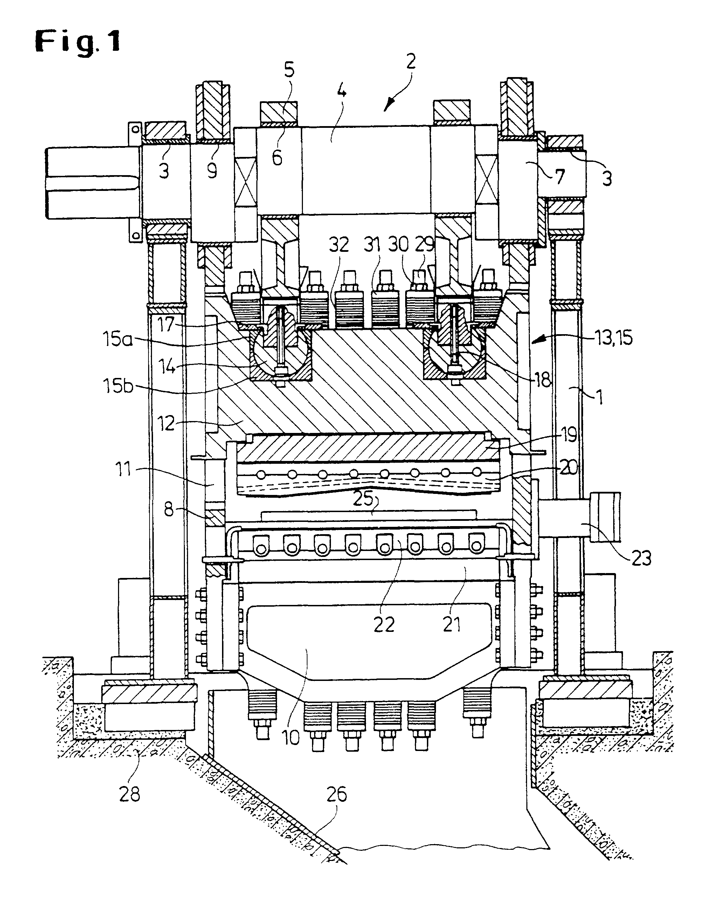

Figur 1 zeigt eine Pendelschere in teilweise längs geschnittener Vorderansicht, mit einem Rahmen (1), der auf einem Fundament (28) Körperschall isoliert befestigt ist. In ihm ist eine Kurbelwelle (2) in Kurbelwellenlagern (3) gelagert. Die Kurbelwelle (2) wird von einem nicht dargestellten Elektromotor über eine Schaltkupplung und ein Untersetzungsgetriebe im Bedarfsfall angetrieben. Sie ist als doppelt gekröpfte Welle ausgebildet, wobei die Kröpfungen um 180° versetzt sind. Die Innenkröpfung (4) treibt zwei Pleuelstangen (5) über geteilte Pleuellager (6) an. Die beiden Außenkröpfungen (7) treiben zwei Pendel (8) über Pendellager (9) an.

Die Pendel (8) sind mit einer Messertraverse (10) fest verschraubt. In ihnen sind Führungen (11) zur Geradführung eines Obermesserschlittens (12) angeordnet, der von den Pleuelstangen (5) angetrieben wird. Dazu besitzen die Pleuelstangen (5) ein schlittenseitiges Pleuellager (13) mit einer durch eine Pleuellagerschraube (18) anschraubbaren Lagerkugel (14), die mit einer geteilten Kugelpfanne (15) des Obermesserschlittens (12) zusammenwirkt.

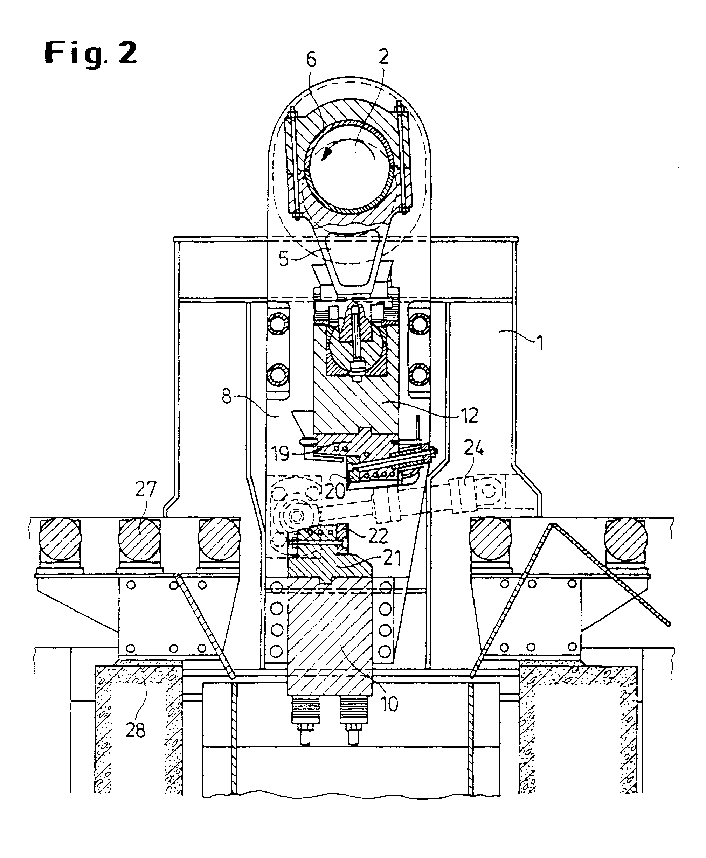

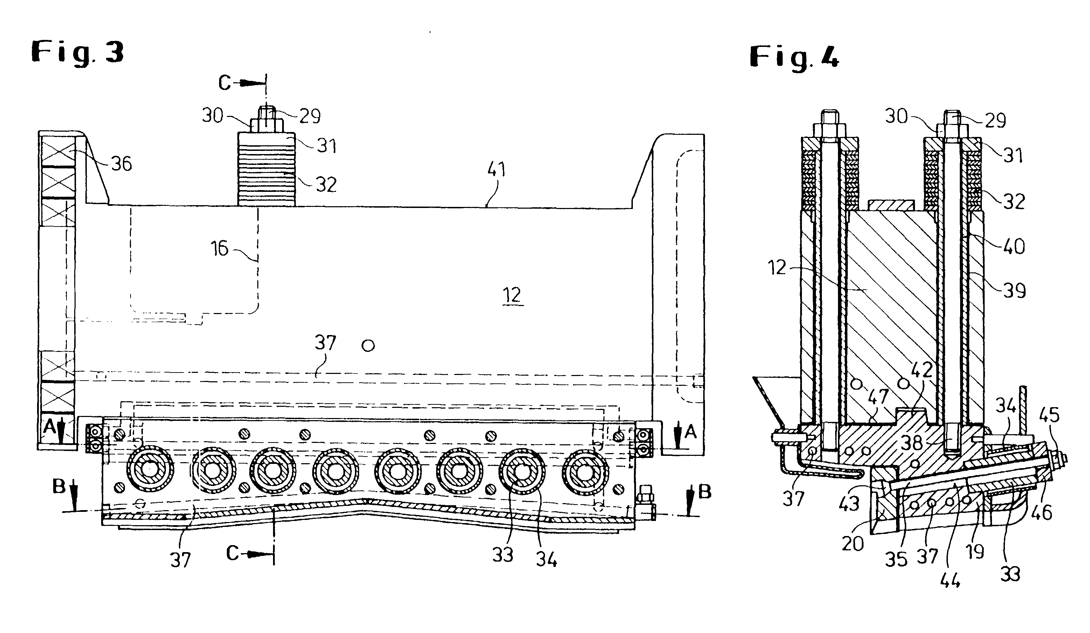

Die geteilte Kugelpfanne (15) besitzt eine untere Kugelpfanne (15a), die in eine entsprechende Sackbohrung (16) des Obermesserschlittens (12) eingesetzt ist und die die Schnittkräfte überträgt. Eine obere Kugelpfanne (15b), die über einen Anschraubring (17) mit dem Obermesserschlitten (12) verbunden ist, trägt dessen Gewicht. Am Obermesserschlitten (12) ist ein Obermesserfutter (19) und an diesem ein Obermesser (20) angeschraubt, wie aus Figur 3 und 4 hervorgeht. Gleiches gilt für die Messertraverse (10), die ein Untermesserfutter (21) und ein Untermesser (22) aufweist. An einem der Pendel (8) ist ein Kragarm (23) angeschraubt, an dem der in Figur 2 gezeigte Hydraulikkolben (24) angreift. Er steuert die Pendelbewegung der Pendel (8). Das Schneidgut (25) ist zwischen den Messern (20, 22) liegend dargestellt. Schneidabfälle werden von einer Schrottrutsche (26) aufgenommen.

In Figur 2 sind die in Figur 1 dargestellten Bauteile in teilweise quer geschnittener Seitenansicht gezeigt. Am Rahmen (1) ist der Hydraulikzylinder (24) angelenkt, der auf den Kragarm (23) einwirkt. Der geschnittene Obermesserschlitten (12) zeigt die Lagerkugel (14) der Pleuelstange (5) mit der Kugelpfanne (15). Die Schraubverbindungen des Obermessers (20) und des Untermessers (22) sind ebenfalls ersichtlich. Selbstlaufende Rollen (27) dienen dem Transport des Schneidgutes.

Figur 3 zeigt eine Frontansicht des Obermesserschlittens (12) mit dem Obermesserfutter (19) und dem Obermesser (20). Eine der zwölf Zuganker (29) zum Anschrauben des Obermesserfutters (19) an den Obermesserschlitten (12) ist mit einer Zugankermutter (30), einer Unterlegscheibe (31) und einem Paket von Tellerfedern (32) in Einbauposition dargestellt.

Ebenso sind zwölf Druckbüchsen (33) mit koaxialen Schutzhülsen (34) für Obermesserzuganker (35) zum Anschrauben des Obermessers (20) an das Obermesserfutter (19) dargestellt. Am linken Rand des Obermesserschlittens (12) sind Führungsschuhe (36) zum Gleiten in der Führung (11) des Pendels (8) angeordnet. Gestrichelt dargestellt sind die Sackbohrung (16) für die Kugelpfanne (15) des schlittenseitigen Pleuellagers (13) und Längsbohrungen (37) für die Kühlflüssigkeit in dem Obermesserschlitten (12) und dem Obermesserfutter (19).

Aus Figur 4 gehen Lager und Anordnung der Zuganker (29) mit ihren Zugankermuttern (30), den Unterlegscheiben (31) und den Ringfedern (32) hervor. Die Zuganker (29) sind in Gewindebohrungen (38) des Obermesserfutters (19) eingeschraubt und durchragen Öffnungen (39) des Obermesserschlittens (12). Koaxial zu den Zugankern (29) sind in den Öffnungen (39) Druckhülsen (40) angeordnet, die durch die Zugankermuttern (30) und die Unterlegscheiben (31) in Druckkontakt mit dem Obermesserfutter (19) stehen. Zugleich dienen die Druckhülsen (40) als radiale Führung und Federwegbegrenzung für die Tellerfedern (32), die einen bestimmten Teil der Zugankerkraft auf die messerferne Seite (41) des Obermesserschlittens (12) übertragen und auf diese Weise denselben mit dem Obermesserfutter (19) in Druckkontakt bringen. Zahl und Vorspannung der Tellerfedern (32) sind so ausgelegt, dass einerseits der erforderliche Druck zwischen Obermesserschlitten (12) und Obermesserfutter (19) erreicht wird, andererseits die Schraubverbindung bei Verzug des Obermesserfutters (19) keine überbeanspruchung erfährt. Zusätzlich zum Druckverbund sind Obermesserschlitten (12) und Obermesserfutter (19) durch eine T-förmig gestaltete Nut-Federanordnung (42) formschlüssig gegen seitliches Verschieben gesichert.

Die Befestigung des Obermessers (20) an dem Obermesserfutter (19) geschieht mittels Obermesserzuganker (35). Diese weisen einen konischen Zugankerkopf (43) auf, der im Obermesser (20) versenkt und dadurch geschützt angeordnet ist. Die Obermesserzuganker (35) durchragen eine Obermesserbohrung (44) und die zu dieser koaxial angeordnete Druckbüchse (33). Die Zugkraft der Obermesserzuganker (35) wird von einer Obermessermutter (45) über eine Obermesserunterlegscheibe (46), die Druckbüchse (33) und das Obermesserfutter (19) auf das Obermesser (20) übertragen. Da dieses zur Minimierung der Biegebeanspruchung von Obermesserfutter (19) und Obermesserschlitten (12) in deren Mittenbereich angeordnet ist, wurden die Obermesserzuganker (35) mittels der Druckbüchsen (33) verlängert und damit elastischer gemacht. Auf diese Weise sind auch sie der durch möglichen Verzug des Obermesserfutters (19) bewirkten Zusatzbeanspruchung gewachsen.

Die Obermesserbohrungen (44) und die Bohrungen der Druckbüchsen (33) sind deutlich größer als der Durchmesser der Obermesserzuganker (35) ausgelegt. Dadurch ist auch ein Einstellspielraum für nachgeschliffene Obermesser (20) gegeben. Die Längsbohrungen (37) des Obermesserfutters (19) sind in den thermisch hoch belasteten Zonen desselben angeordnet. Ihre Zahl ist deutlich höher als die der Längsbohrungen (37) im Obermesserschlitten (12). Dieser ist wegen der Intensivkühlung des Obermesserfutters (19) und durch eine Wärme isolierende Zwischenschicht (47) thermisch geringer belastet. Er ist deshalb aus normalem Stahlguss gefertigt, während das Obermesserfutter (19) aus warmfestem Stahlguss und das Obermesser (20) aus einer hoch nickelhaltigen, hitzebeständigen Legierung bestehen.

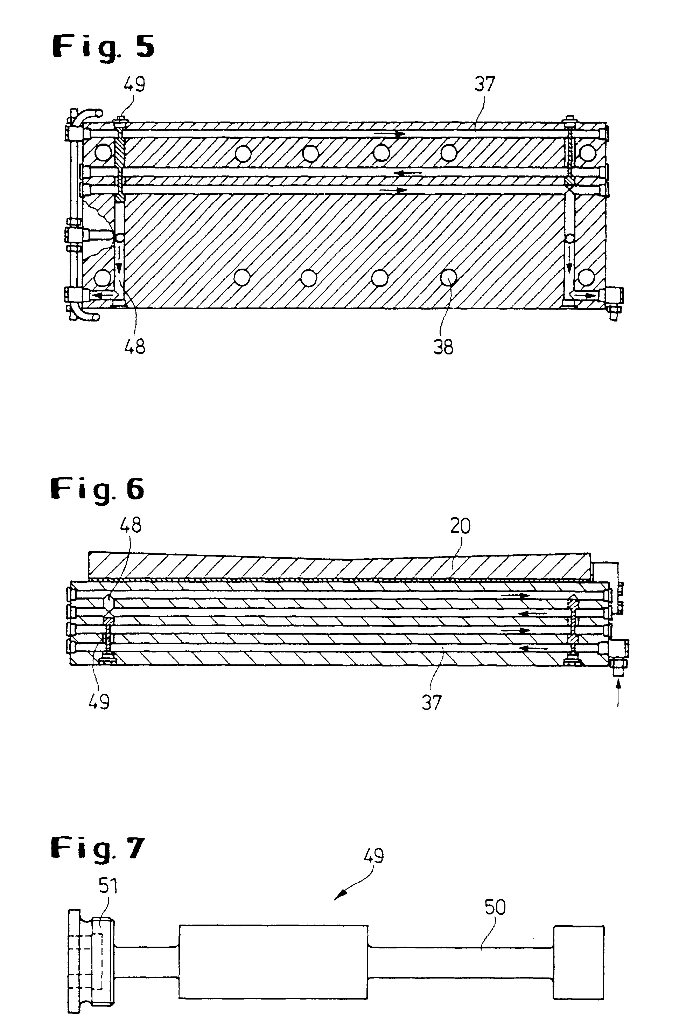

Figur 5 zeigt den Schnitt A-A der Figur 3 durch das Obermesserfutter (19) und Figur 6 den Schnitt B-B. Die Längsbohrungen (37) und die Querbohrungen (48) der Bohrungskühlung sind erkennbar, ebenso die der Führung der Kühlflüssigkeit und der Abdichtung der Querbohrungen dienenden Leitelemente (49). Diese sind, wie in Figur 7 vergrößert dargestellt, als einschraubbare Zylinder vom Durchmesser der Querbohrungen (48) ausgebildet, die im Bereich der Längsbohrungen (37) koaxiale Einschnürungen (50) aufweisen und am Außenende als Gewindestopfen (51) ausgebildet sind. In Figur 5 sind außerdem die Gewindebohrungen (38) für die Zuganker (29) erkennbar, in Figur 6 das Obermesser (20).

Die Messertraverse (10) ist, wie aus Fig. 1 und 2 ersichtlich, bezüglich Schraubverbindungen zwischen ihr und dem Untermesserfutter (21) sowie zwischen diesem und dem Untermesser (22) entsprechend dem Obermesserfutter (19) aufgebaut. Auch die Bohrungskühlung ist vergleichbar mit der des Obermesserfutters (19).

Die Funktion der Pendelschere entspricht dem bekannten Prinzip der Überlagerung der gegenläufigen Messerbewegung senkrecht zum Halbzeugstrang mit der Pendelbewegung synchron zu diesem. Dadurch wird ein Aufstau bzw. eine Verformung des Halbzeugstrangs während der endlichen Abschneidezeit vermieden. Durch die erfindungsgemäße Ausgestaltung der Pendelschere weist diese eine hohe Zuverlässigkeit und Standzeit auf.

Der Gegenstand der Erfindung umfasst nicht nur den vorliegenden mechanischen Messerantrieb sondern auch andere, zum Beispiel hydraulische oder pneumatische Antriebe.

## Patentansprüche

1. Pendelschere zum Durchschneiden von in Bewegung befindlichen, insbesondere hochtemperierten Halbzeugsträngen, mit einer in einem Rahmen (1) drehbar gelagerten, doppelt gekröpften Kurbelwelle (2), die einen Obermesserschlitten (12) mit zugehörigem Obermesser (20) über zwei Pleuelstangen (5) und eine Messertraverse (10) mit zugehörigem Untermesser (22) über zwei Pendel (8) gegenläufig antreibt, wobei dem Obermesser (20) und dem Untermesser (22) ein mit einem Fluid kühlbares Messerfutter (19, 21) zugeordnet ist, **dadurch gekennzeichnet, dass**
- zwischen dem Obermesserschlitten (12) und dem Obermesserfutter (19) sowie zwischen der Messertraverse (10) und dem Untermesserfutter (21) eine wärmeisolierende Zwischenschicht (47) angeordnet ist
- und dass der Obermesserschlitten (12) und die Messertraverse (10) sowie die zugehörigen Messerfutter (19, 21) als massive Bauteile ausgebildet sind, wobei neben dem Messerfutter (19, 21) auch der Obermesserschlitten (12) und die Messertraverse (10) mit Bohrungskühlung, umfassend Bohrungen zur Führung von Kühlflüssigkeit, versehen sind.

2. Pendelschere nach Anspruch 1, **dadurch gekennzeichnet, dass** der Obermesserschlitten (12) mit dem Obermesserfutter (19) und die Messertraverse (10) mit dem Untermesserfutter (21) sowie zumindest das Obermesser (20) mit dem Obermesserfutter (19) durch eine elastische Schraubverbindung verbunden sind.

3. Pendelschere nach Anspruch 2, **dadurch gekennzeichnet, dass** die Schraubverbindung zwischen Obermesserschlitten (12) und Obermesserfutter (19) sowie zwischen Messertraverse (10) und Untermesserfutter (21) Zuganker (29) aufweist, die durch Öffnungen (39) im Obermesserschlitten (12) bzw. in der Messertraverse (10) hindurchragen und die in die Messerfutter (19, 21) einschraubbar sind und dass die Zugankermuttern (30) über je eine Unterlegscheibe (31) sowie über je eine koaxiale Druckhülse (40) mit dem Messerfutter (19, 21) und über je ein koaxiales Federelement mit der messerfernen Seite (41) des Obermesserschlittens (12) bzw. der Messertraverse (10) in Druckkontakt stehen.

4. Pendelschere nach Anspruch 3, **dadurch gekennzeichnet, dass** die Federelemente zumindest eine Tellerfeder (32) aufweisen.

5. Pendelschere nach Anspruch 2, 3 oder 4, **dadurch gekennzeichnet, dass** die Schraubverbindung zwischen Obermesser (20) und Obermesserfutter (21) einen Obermesserzuganker (35) aufweist, der das Obermesserfutter (21) überragt und mit diesem über eine zur Horizontalen geneigten, koaxialen Druckbüchse (33) in Druckkontakt steht.

6. Pendelschere nach einem der Ansprüche 1 bis 5, **dadurch gekennzeichnet, dass** im messerseitigen Bereich des Obermesserschlittens (12) und der Messertraverse (10) sowie der Messerfutter (19, 21) Längsbohrungen (37) vorgesehen sind, die parallel zu den Messern (20, 21) angeordnet und durch Querbohrungen (48) verbunden sind.

7. Pendelschere nach Anspruch 6, **dadurch gekennzeichnet, dass** in den Querbohrungen (48) Leitelemente (49) zur Strömungsführung des Kühlmittels vorgesehen sind.

8. Pendelschere nach Anspruch 7, **dadurch gekennzeichnet, dass** die Leitelemente (49) als einschraubbare Zylinder vom Durchmesser der Querbohrungen (48) ausgebildet sind, die im Bereich der Längsbohrungen (37) koaxiale Einschnürungen (50) aufweisen.

9. Pendelschere nach einem oder mehreren der Ansprüche 1 bis 8, **dadurch gekennzeichnet, dass** die Pleuelstangen (5) ein schlittenseitiges Pleuellager (13) mit einer anschraubbaren Lagerkugel (14) aufweisen, die mit einer geteilten Kugelpfanne (15) des Obermesserschlittens (12) zusammenwirkt.

## Claims

1. Pendulum shears for cutting through semi-finished strips, which are in particular highly tempered, disposed in movement, comprising a doubly cranked crankshaft (2) which is rotatably mounted in the frame (1) and which drives in opposite sense an upper knife carriage (12) with associated upper knife (20) by way of two connecting rods (5) and a knife cross member (10) with associated lower knife (22) by way of two pendulums (8), wherein a knife chuck (19, 21) coolable by a fluid is associated with the upper knife (20) and the lower knife (22), **characterised in that**
- a heat-insulating intermediate layer (47) is arranged between the upper knife carriage (12) and the upper knife chuck (19) as well as between the knife cross member (10) and the lower knife chuck (21)
- and that the upper knife carriage (12) and the knife cross member (10) as well as the associated knife chucks (19, 21) are constructed as solid components, wherein apart from the knife chucks (19, 21) also the upper knife carriage (12) and the knife cross member (10) are provided with bore-cooling comprising bores for the feed of cooling liquid.

2. Pendulum shears according to claim 1, **characterised in that** the upper knife carriage (12) is connected with the upper knife chuck (19), the knife cross member (10) is connected with the lower knife chuck (21) and at least the upper knife (20) is connected with the upper knife chuck (19) in each instance by way of a resilient screw connection.

3. Pendulum shears according to claim 2, **characterised in that** the screw connection between upper knife carriage (12) and upper knife chuck (19) as well as between knife cross member (10) and lower knife chuck (21) comprises tie rods (29) which protrude through openings (39) in the upper knife carriage (12) and in the knife cross member (10), respectively, and which can be screwed into the knife chucks (19, 21) and that the tie rod nuts (30) are disposed in pressurable contact by way of a respective washer (31) and by way of a respective coaxial pressure sleeve (40) with the knife chucks (19, 21) and by way of a respective coaxial spring element with the side (41), which is remote from the knives, of the upper knife carriage (12) and the knife cross member (10).

4. Pendulum shears according to claim 3, **characterised in that** the spring elements comprise at least one plate spring (32).

5. Pendulum shears according to claim 2, 3 or 4, **characterised in that** the screw connection between upper knife (20) and upper knife chuck (21) comprises an upper knife tie rod (35) which projects beyond the upper knife chuck (21) and is disposed in pressurable contact therewith by way of a coaxial pressure bush (33) inclined relative to the horizontal.

6. Pendulum shears according to one of claims 1 to 5, **characterised in that** longitudinal bores (37), which are arranged parallel to the knives (20, 21) and are connected by transverse bores (48), are provided in the region, which is at the knife side, of the upper knife carriage (12) and the knife cross member (10) as well as the knife chucks (19, 21).

7. Pendulum shears according to claim 6, **characterised in that** guide elements (49) for flow guidance of the coolant are provided in the transverse bores (48).

8. Pendulum shears according to claim 7, **characterised in that** the guide elements (49) are constructed as cylinders, which can be screwed in, having the diameter of the transverse bores (48), which cylinders have coaxial constrictions (50) in the region of the longitudinal bores (37).

9. Pendulum shears according to one or more of claims 1 to 8, **characterised in that** the connecting rods (5) have a connecting rod bearing (13), which is at the carriage side, with a bearing ball (14) which can be screwed on and which co-operates with a divided ball socket (15) of the upper knife carriage (12).

## Revendications

1. Cisaille pendulaire pour couper des barres de demi-produit en mouvement, en particulier hautement tempérées, comportant une manivelle (2) coudée deux fois et montée mobile en rotation dans un cadre (1), laquelle entraîne en sens opposés un chariot à couteau supérieur (12) comportant un couteau supérieur associé (20) via deux bielles (5) et une traverse de couteau (10) avec un couteau inférieur associé (22) via deux éléments pendulaires (8), un porte-couteau (19, 21) susceptible d'être refroidi par un fluide étant associé au couteau supérieur (10) et au couteau inférieur (22), **caractérisée en ce que**
- une couche intermédiaire calorifuge (47) est agencée entre le chariot à couteau supérieur (12) et le porte-couteau supérieur (19) et entre la traverse de couteau (10) et le porte-couteau inférieur (21),
- et **en ce que** le chariot à couteau supérieur (12) et la traverse de couteau (10) ainsi que les porte-couteaux associés (19, 21) sont réalisés sous forme de composants massifs, le porte-couteau (19, 21) et également le chariot à couteau supérieur (12) et la traverse de couteau (10) étant pourvus d'un agencement de refroidissement à perçages pour guider du liquide réfrigérant.

2. Cisaille pendulaire selon la revendication 1, **caractérisée en ce que** le chariot à couteau supérieur (12) est relié au porte-couteau supérieur (19), et la traverse de couteau (10) est reliée au porte-couteau inférieur (21), et au moins le couteau supérieur (20) est relié au porte-couteau supérieur (19) par une liaison vissée élastique.

3. Cisaille pendulaire selon la revendication 2, **caractérisée en ce que** la liaison vissée entre le chariot à couteau supérieur (12) et le porte-couteau supérieur (19) ainsi que entre la traverse de couteau (10) et le porte-couteau inférieur (21) comprend des tirants (29) qui traversent des ouvertures (39) dans le chariot à couteau supérieur (12) ou dans la traverse de couteau (10) et qui peuvent être vissés dans les porte-couteaux (19, 21), et **en ce que** les écrous de tirant (30) sont en contact sous pression avec le porte-couteau (19, 21) via une rondelle d'appui respective (31) et via une douille de compression coaxiale respective (40), et en contact sous pression avec le côté (41), éloigné du couteau, du chariot à couteau supérieur (12) ou de la traverse de couteau (10) via un élément élastique coaxial respectif.

4. Cisaille pendulaire selon la revendication 3, **caractérisée en ce que** les éléments élastiques comprennent au moins un ressort Belleville (32).

5. Cisaille pendulaire selon l'une des revendications 2, 3 ou 4, **caractérisée en ce que** la liaison vissée entre le couteau supérieur (20) et le porte-couteau supérieur (21) comprend un tirant de couteau supérieur (35) qui dépasse au-delà du porte-couteau supérieur et qui est en contact sous pression avec celui-ci via une douille de compression coaxiale (33) inclinée par rapport à l'horizontale.

6. Cisaille pendulaire selon l'une des revendications 1 à 5, **caractérisée en ce qu'**il est prévu, dans la zone du côté couteau du chariot à couteau supérieur (12) et de la traverse de couteau (10) ainsi que des porte-couteaux (19, 21), des perçages allongés (37) qui sont ménagés parallèlement aux couteaux (20, 21) et reliés par des perçages transversaux (48).

7. Cisaille pendulaire selon la revendication 6, **caractérisée en ce que** des éléments directeurs (49) sont prévus dans les perçages transversaux (48) pour le guidage de l'écoulement du réfrigérant.

8. Cisaille pendulaire selon la revendication 7, **caractérisée en ce que** les éléments directeurs (49) sont réalisés sous forme de cylindres à visser présentant le diamètre des perçages transversaux (48), qui présentent des rétrécissements coaxiaux (50) dans la zone des perçages allongés (37).

9. Cisaille pendulaire selon l'une ou plusieurs des revendications 1 à 8, **caractérisée en ce que** les bielles (5) comprennent un coussinet de bielle (13) côté chariot, comportant une bille de montage à visser (14) qui coopère avec une cavité sphérique divisée (15) du chariot à couteau supérieur (12).
